# EUROPÄISCHE PATENTSCHRIFT

(11) **EP 3 883 826 B1**
(45) Veröffentlichungstag und Bekanntmachung des Hinweises auf die Patenterteilung: **27.03.2024**
(21) Anmeldenummer: 19806098.0
(22) Anmeldetag: 29.10.2019
(51) Int. Cl.: B60T 8/172

(54) **VERFAHREN ZUR BESTIMMUNG EINES BREMSWEGS**
METHOD FOR DETERMINING A BRAKING DISTANCE
PROCÉDÉ POUR LA DÉTERMINATION D'UNE DISTANCE DE FREINAGE

(30) Priorität: 20.11.2018 DE 102018129132
(43) Veröffentlichungstag der Anmeldung: 29.09.2021
(73) Patentinhaber: KNORR-BREMSE Systeme für Schienenfahrzeuge GmbH, 80809 München (DE)
(72) Erfinder: KREMER, Miklos, 1215 Budapest (HU); SZEKELY, Ferenc, 2381 Táborfalva (HU); HAEHLE, Falk, 82110 Germering (DE); RAHNEMA, Kiana, 85221 Dachau (DE)
(86) Internationale Anmeldenummer: PCT/EP2019/079499
(87) Internationale Veröffentlichungsnummer: WO 2020/104148

(56) Entgegenhaltungen:
- EP-A1- 0 866 923
- WO-A1-2016/079014
- US-A1- 2011 029 213

## Beschreibung

Die vorliegende Erfindung bezieht sich auf ein Verfahren zur Bestimmung eines Bremswegs eines Fahrzeugs bei einer Reibungsbremse.

Ein Bremsweg ist ein wichtiger Indikator der Bremsleistung einer Bremsanlage eines Fahrzeugs. In der Norm UIC 544-1 zur Bewertung der Bremsleistung zum Zwecke der Zugzulassung ist ein Verfahren zur Bestimmung eines Bremsweges nach dem Zeitschrittverfahren vorgesehen. Diese Art der konventionellen Bremswegbestimmung geht jedoch davon aus, dass der Reibungskoeffizient (COF) zwischen einem Bremsbelag und einer Bremsscheibe während der gesamten Bestimmung konstant ist.

Das Patentdokument WO2016/079014A1 offenbart ein Verfahren zur Ermittlung eines Reibwertverlaufes zwischen Bremsbelag und Bremsscheibe auf einer Prüfeinrichtung. Der ermittelte Reibwertverlauf wird dann im Verfahren zum Betrieb einer Bremse eingesetzt, um einen Normalkraftverlauf des Bremsbelags auf der Bremsscheibe bei einer entsprechenden Bremsanforderung zu ermitteln, wodurch ein Soll-Bremskraftverlauf für den Betrieb ermittelt wird. Es wird ebenfalls eine Bremseinrichtung offenbart, welche dazu vorgesehen ist eine Bremsung anhand eines derart ermittelten Bremskraftverlaufes zu berücksichtigen.

Vor dem beschriebenen Hintergrund des Stands der Technik ist eine Aufgabe der vorliegenden Erfindung, ein Verfahren zu schaffen, um die Genauigkeit der Bestimmung/Schätzung eines Bremsweges eines Fahrzeugs zu erhöhen, und damit verbunden die Genauigkeit der Bewertung der Bremsleistung eines Fahrzeugs.

Diese Aufgabe wird mittels eines Verfahrens zur Bestimmung eines Bremswegs nach Anspruch 1 und durch ein Computerprogrammprodukt nach Anspruch 5 gelöst. Weitere vorteilhafte Entwicklungen der Erfindung sind Gegenstand der abhängigen Ansprüche.

Die Annahme, dass der Reibungskoeffizient (COF) zwischen einem Bremsbelag und einer Bremsscheibe während der gesamten Bestimmung konstant ist, entspricht nicht der Realität. Daher wird das Ergebnis der berechneten/geschätzten Bremswege oftmals stark von der Realität abweichen. In Wirklichkeit ist der Reibungskoeffizient (COF) stark temperaturabhängig. Während der Fahrt eines Zugs variiert die Temperatur der Reibschicht (der Scheibenoberfläche oder der Radlauffläche) in Abhängigkeit von verschiedenen Bremssituationen, z. B. der Größe der Ausgangsgeschwindigkeit, der Größe der auf die Bremsscheibe einwirkenden

Bremskraft, oder von der thermischen Eigenschaft der Bremsscheiben. Außerdem I steigt die Temperatur der Reibschicht wenn der Zug mit mehr Last beaufschlagt ist.

Das Verfahren gemäß der vorliegenden Erfindung berücksichtigt bei der Bestimmung eines Bremsweges die momentane Fahrzeuggeschwindigkeit, die rechnerische Spannkraft zwischen dem Bremsbelag und der Bremsscheibe und insbesondere eine Oberflächentemperaturabhängigkeit des Reibungskoeffizienten. Außerdem berücksichtigt das Verfahren die Erwärmung der Scheiben und Beläge und die Änderung des Reibungskoeffizienten gleichzeitig, da der Reibungskoeffizient den Verlauf der Fahrzeuggeschwindigkeit beim Bremsen bewirkt, die Temperatur der Reibschicht von der Fahrzeuggeschwindigkeit bewertbar ist, und der Reibungskoeffizient wiederum von der Temperatur der Reibschicht abhängig ist. D.h. dass während des Abbremsvorgangs sowohl die Erwärmung als auch die Reibungsprozesse gleichzeitig berücksichtigt werden, da beide voneinander abhängen bzw. sich gegenseitig beeinflussen.

Das Verfahren gemäß der vorliegenden Erfindung wird anhand der Figuren detailliert beschrieben.

Fig. 1 zeigt ein Flussdiagramm, das die wichtigsten Schritte des Verfahrens zur Bestimmung eines Bremsweges gemäß der vorliegenden Erfindung zeigt;

Fig. 2 zeigt ein Flussdiagramm, das die Schritte der Fig. 1 in einer anderen Darstellung zeigt.

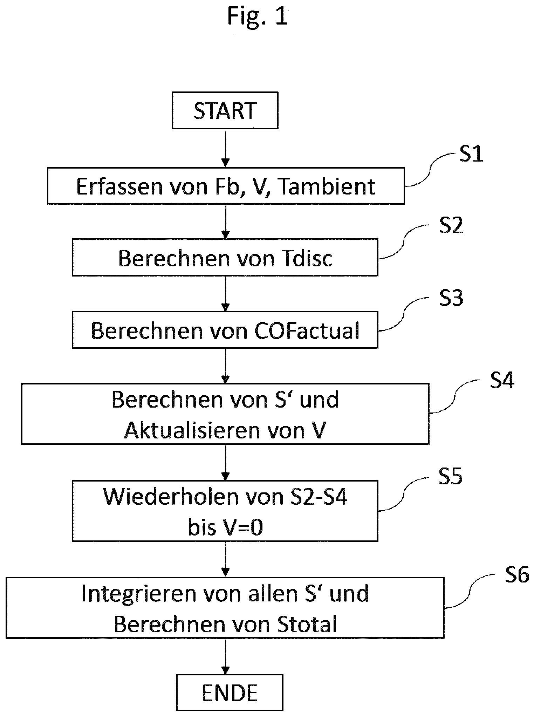

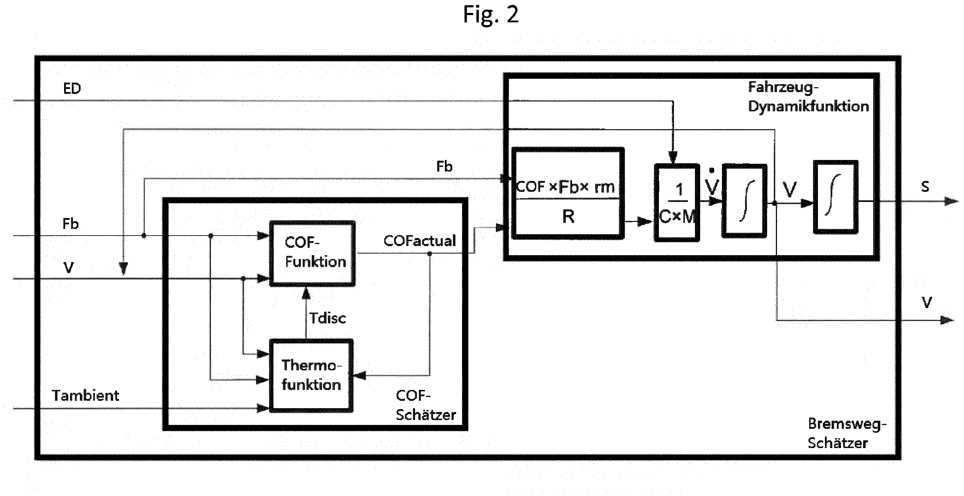

**Fig. 1** und **Fig. 2** zeigen die wichtigsten Schritte eines Verfahrens nach der vorliegenden Erfindung, um einen Bremsweg eines Fahrzeugs zu bestimmen.

Zunächst werden eine Spannkraft Fb zwischen einer Scheibe und einem Bremsbelag, eine Fahrzeuggeschwindigkeit (Ausgangsgeschwindigkeit) V und eine Umgebungstemperatur Tambient zu dem Zeitpunkt t₀, wenn ein Bremsvorgang beginnt, in einen COF-Schätzer eines Bremsweg-Schätzers eingegeben (S1). Die Fahrzeuggeschwindigkeit V bei S1 ist dann die Ausgangsgeschwindigkeit V(t₀).

Anschließend wird eine Temperatur der Reibschicht Tdisc(t₀) mittels einer Thermofunktion berechnet (S2), wobei die Thermofunktion mindestens Fb, V(t₀) und Tambient als Parameter für die Bestimmung berücksichtigt.

Danach wird ein Reibungskoeffizient COFactual(t₀) zu dem Zeitpunkt t₀ mittels einer COF-Funktion berechnet (S3), wobei die Thermofunktion mindestens Fb, V(t₀) und Tdisc(t₀) als Parameter für die Bestimmung berücksichtigt. Die Reibungskoeffizient COF -Berechnung erfolgt über eine empirische Formel, beispielsweise in der Form COF_i=a+b*Fb_(i-1) + c*Fb^2_(i-1)+ d*v_(i-1)+e*v^2_(i-1)+f*T_(i-1)+j*T^2_(i-1), wobei a, b, c, d, e, f, j geeignet gewählte Parameter sind.

Anschließend wird ein Teilbremsweg S'₁ für ein vorgegebenes Zeitintervall Δt von t₀ bis t₁ mittels einer Fahrzeug-Dynamikfunktion berechnet (S4), wobei t₁ der nächste Zeitpunkt, der für die Berechnung angenommen wird, bedeutet, und Δt = t₁ - t₀ gilt. Das Zeitintervall Δt kann als eine Variable in der Fahrzeug-Dynamikfunktion eingestellt werden. Die Fahrzeug-Dynamikfunktion berücksichtigt dabei mindestens Fb, V(t₀), COFactual(t₀) als Parameter für die Berechnung. In S4 wird parallel noch eine V(t₁), eine Fahrzeuggeschwindigkeit zum Zeitpunkt t₁, berechnet (wobei Rm=mittlerer Reibradius Belag/Scheibe, R=Radradius, m = statische Masse (= Gewicht) und C ein Umrechnungsfaktor statische Masse => dynamische Masse. Beispiel: C=1,1 bedeutet 10% rotatorische Masse die zusätzlich zur statischen Masse abgebremst werden muss).

In dem Schritt S5 werden die Schritte S2 bis S4 solange wiederholt, bis die Fahrzeuggeschwindigkeit V der Endgeschwindigkeit (z.B. null) entspricht, d.h. der Bremsvorgang ist zu Ende.

Im Folgenden wird eine Wiederholung im Sinne von S5 beschrieben, um das Prinzip der Berechnung des S5 zu erklären. Als nächstes nimmt die Thermofunktion das Ergebnis des Reibungskoeffizienten COFactual(t₀) von dem letzten S3 und das Ergebnis der Fahrzeuggeschwindigkeit V(t₁) von dem letzten S4 und berechnet die Temperatur der Reibschicht neu, wobei sich eine Tdisc(t₁) ergibt (S2). Danach nimmt die COF-Funktion die aktualisierte Temperatur der Reibschicht Tdisc(t₁) und die Fahrzeuggeschwindigkeit V(t₁) und berechnet den Reibungskoeffizient neu, wobei sich ein COFactual(t₁) ergibt (S3). Fb wird dabei von außen vorgegeben (z.B. durch Bremskraft-Verteilungsalgorithmen. In einfachen Fällen ist Fb=constant also ein Spezialfall. Während eines Integrationsschrittes bleibt Fb konstant. Tambient wird für Fb nicht verwendet, nur zur Tdisc Berechnung (in jedem Schritt).

Anschließend nimmt die Fahrzeug-Dynamikfunktion den neuen Reibungskoeffizient COFactual(t₁) und berechnet einen Teilbremsweg S'₂ für ein Zeitintervall Δt von t₁ bis t₂, wobei Δt = t₂ - t₁ gilt. Und parallel dazu berechnet die Fahrzeug-Dynamikfunktion noch eine V(t₂), eine Fahrzeuggeschwindigkeit zum Zeitpunkt t₂. Danach werden in S5 die Berechnungen von S2-S4 für die Zeitpunkte t₃, t₄, t₅, ... solange wiederholt, bis die Fahrzeuggeschwindigkeit null wird (V = 0).

Am Ende werden alle Teilbremswege S'₁, S'₂, ... zusammenaddiert bzw. integriert und dadurch wird ein gesamter Bremsweg Stotal berechnet (S6).

Das Verfahren der vorliegenden Erfindung berücksichtigt den dynamischen Reibungskoeffizient COF zwischen den Scheiben und Belägen und die dynamische Temperatur der Reibschicht Tdisc, wobei der COF und die Tdisc für alle einzelnen Berechnungsschritte berechnet und aktualisiert werden. Daraus kann ein an die Realität angenähertes Ergebnis des Bremswegs berechnet/geschätzt werden. Je kleiner das Zeitintervall Δt eingestellt wird, desto genauer wird das Ergebnis des gesamten Bremswegs Stotal.

## Patentansprüche

1. Von einem Computer ausgeführtes Verfahren zur Bestimmung eines Bremswegs, wobei das Verfahren folgende Schritte aufweist:
S1: Eingeben von einer Spannkraft Fb zwischen einem Bremsbelag und einer Bremsscheibe, einer Fahrzeuggeschwindigkeit V, und einer Umgebungstemperatur Tambient;
S2: Berechnen einer Temperatur einer Reibschicht Tdisc mittels einer Thermofunktion, wobei die Thermofunktion mindestens Fb, V und Tambient als Parameter berücksichtigt;
S3: Berechnen eines Reibungskoeffizienten COFactual zwischen dem Bremsbelag und der Bremsscheibe, wobei mindestens Fb, V und Tdisc als Parameter berücksichtigt werden;
S4: Berechnen von einem Teilbremsweg S' eines Zeitintervalls, wobei mindestens Fb, V und COFactual als Parameter berücksichtigt werden, und Aktualisieren von V;
S5: Wiederholen von S2 - S4 bis V = 0, wobei bei jeder Wiederholung, Tdisc mittels S2 aktualisiert wird, COFactual mittels S3 aktualisiert wird, und
ein neuer Teilbremsweg S' für ein nächstes Zeitintervall berechnet wird und die Fahrzeuggeschwindigkeit V aktualisiert wird;
S6: Zusammenaddieren bzw. integrieren von allen S' von S4 zum Bestimmen von einem gesamten Bremsweg Stotal.

2. Von einem Computer ausgeführtes Verfahren nach Anspruch 1, wobei in dem Schritt S4 eine zusätzliche Bremskraft, insbesondere eine durch eine Elektrodynamische Bremse, und/oder eine Magnetschienenbremse erzeugte Bremskraft in der Bestimmung berücksichtig wird.

3. Von einem Computer ausgeführtes Verfahren nach Anspruch 1 oder 2, wobei in dem Schritt S4 das Zeitintervall einstellbar ist.

4. Von einem Computer ausgeführtes Verfahren nach einem der Ansprüche 1 bis 3, wobei in dem Schritt S2 die Temperatur einer Reibschicht aus einer anderen Quelle kommt.

5. Computerprogramprodukt, das konfiguriert ist, um ein Verfahren nach einem der Ansprüche 1 bis 4 auszuführen, wenn das Programm durch einen Computer ausgeführt ist.

## Claims

1. A computerized method for determining a braking distance, wherein the method comprises the following steps:
S1: Inputting a tensioning force Fb between a brake pad and a brake disc, a vehicle speed V, and an ambient temperature Tambient,
S2: Calculating a temperature of a friction layer Tdisc by means of a thermal function, wherein the thermal function takes at least Fb, V and Tambient into account as parameters,
S3: Calculating a coefficient of friction COFactual between the brake pad and the brake disc, wherein at least Fb, V and Tdisc are taken into account as parameters,
S4: Calculating a partial braking distance S' of a time interval, wherein at least Fb, V and COFactual are taken into account as parameters, and updating V,
S5: Repeating S2 - S4 until V = 0, wherein on each repetition,
Tdisc is updated by means of S2,
COFactual is updated by means of S3, and
a new partial braking distance S' is calculated for a next time interval and the vehicle speed V is updated,
S6: Adding together and/or incorporating all S' from S4 to determine a total braking distance Stotal.

2. A computerized method according to claim 1, wherein, in step S4, an additional braking force, in particular a braking force generated by an electrodynamic brake, and/or a magnetic rail brake, is taken into account in the determination.

3. A computerized method according to claim 1 or 2, wherein, in step S4, the time interval is adjustable.

4. A computerized method according to any one of claims 1 to 3, wherein, in step S2, the temperature of a friction layer comes from another source.

5. Computer program product, which is configured to implement a method according to any of the claims 1 to 4 when the program is run by a computer.

## Revendications

1. Procédé réalisé par un ordinateur destiné à la détermination d'une distance de freinage, dans lequel le procédé présente les étapes suivantes :
S1 : saisie d'une force de serrage Fb entre une garniture de frein et un disque de frein, d'une vitesse de véhicule V et d'une température ambiante Tambient ;
S2 : calcul d'une température d'une couche de frottement Tdisc au moyen d'une fonction thermique, dans lequel la fonction thermique prend en compte au moins Fb, V et Tambient en tant que paramètres ;
S3 : calcul d'un coefficient de frottement COFactual entre la garniture de frein et le disque de frein, dans lequel au moins Fb, V et Tdisc sont pris en compte en tant que paramètres ;
S4 : calcul d'une distance de freinage partielle S' d'un intervalle de temps, dans lequel au moins Fb, V et COFactual sont pris en compte en tant que paramètres et actualisation de V ;
S5 : répétition de S2 - S4 jusqu'à ce que V = 0, dans lequel lors de chaque répétition,
Tdisc est actualisé au moyen de S2,
COFactual est actualisé au moyen de S3, et
une nouvelle distance de freinage partielle S' est calculée pour un intervalle de temps suivant et la vitesse de véhicule V est actualisée ;
S6 : addition ou bien intégration de toutes les S' de S4 pour déterminer une distance de freinage totale Stotal.

2. Procédé réalisé par un ordinateur selon la revendication 1, dans lequel à l'étape S4 une force de freinage supplémentaire, en particulier une force de freinage générée par le biais d'un frein électrodynamique et/ou d'un frein électromagnétique sur rail est prise en compte dans la détermination.

3. Procédé réalisé par un ordinateur selon la revendication 1 ou 2, dans lequel à l'étape 54 l'intervalle de temps est réglable.

4. Procédé réalisé par un ordinateur selon l'une quelconque des revendications 1 à 3, dans lequel à l'étape S2 la température d'une couche de frottement provient d'une autre source.

5. Produit de programme informatique qui est configuré pour réaliser un procédé selon l'une quelconque des revendications 1 à 4 lorsque le programme est réalisé par le biais d'un ordinateur.
